# EUROPÄISCHE PATENTSCHRIFT

(11) **EP 0 702 441 B1**
(45) Veröffentlichungstag und Bekanntmachung des Hinweises auf die Patenterteilung: **31.03.1999**
(21) Anmeldenummer: 95111742.3
(22) Anmeldetag: 26.07.1995
(51) Int. Cl.: H02B 1/052, H02B 1/46, H02G 3/12

(54) **Elektroinstallationsgerät, insbesondere für Kabelkanäle**
Electrical installation apparatus, especially for cable ducts
Appareillage d'installation électrique, notamment pour canalisations de câbles

(30) Priorität: 13.09.1994 DE 4432509
(43) Veröffentlichungstag der Anmeldung: 20.03.1996
(73) Patentinhaber: GIRA GIERSIEPEN GmbH. & CO. KG., D-42477 Radevormwald (DE)
(72) Erfinder: Panknin, Jürgen, D-42477 Radevormwald (DE)
(74) Vertreter: Patentanwälte Dr. Solf & Zapf

(56) Entgegenhaltungen:
- EP-A- 0 240 916
- EP-A- 0 473 481
- EP-A- 0 528 371
- EP-A- 0 570 285
- DE-A- 3 829 327
- DE-A- 4 111 285
- DE-C- 3 905 226
- DE-C- 4 331 580
- DE-U- 7 610 960
- FR-A- 2 219 515
- GB-A- 2 187 900

## Beschreibung

Die vorliegende Erfindung betrifft ein Elektro-Installationsgerät zur Montage in Kabelkanälen, Unterflurgehäusen, Verteilerschränken, Schaltschränken oder dergleichen Aufnahmegehäusen mit inneren Bodenhalteprofilen, mit einem Gerätegehäuse zur Aufnahme von elektrischen Funktions- bzw. Kontaktelementen.

Zum Einbau von Elektro-Installationsgeräten in Kabelkanäle bzw. sogenannte Brüstungskanäle oder dergleichen Aufnahmegehäuse werden üblicherweise sogenannte Einbaudosen verwendet, wie sie beispielsweise in der DE 31 12 347 C1 beschrieben sind. Hierbei muß zunächst die Einbaudose in das jeweilige Aufnahmegehäuse eingesetzt und mittels spezieller Klammerelemente an dem Bodenhalteprofil (sogenannte "Hutschiene") befestigt werden. Nachfolgend wird das jeweilige Installationsgerät oder eine bestimmte Gerätekombination in die Einbaudose eingesetzt, wobei auch der elektrische Anschluß von Verbindungskabeln und die mechanische Befestigung erfolgen müssen. Danach müssen in der Regel noch weitere Einzelteile, wie z. B. eine Abdeckplatte, montiert werden. Alles in allem ist hierbei die Montage recht umständlich und zeitaufwendig. Zudem ist bei dieser Montageart nachteilig, daß die Einbaudose jeweils nur für eine bestimmte Art des Bodenhalteprofils geeignet ist; da aber bei Kabel- bzw. Brüstungskanälen und sonstigen Aufnahmegehäusen durchaus unterschiedliche Halteprofile vorgesehen sein können, sind auch mehrere, hinsichtlich der Befestigung verschiedene Arten von Einbaudosen erforderlich; vergleiche hierzu auch die DE 39 05 226 C1.

Aus der EP-A-0 528 371 ist es bekannt, einen Gehäusekörper über ein Bodenteil und einen austauschbaren Befestigungsadapter an einem Halteprofil (Profil-bzw. Hutschiene) zu befestigen, wobei der Befestigungsadapter seinerseits an die Art der vorgesehenen Wand- oder Bodenbefestigung angepaßt sein soll. Das bekannte Gehäuse dient zur Aufnahme eingeschobener Leiterplatten und Anschlußklemmen. Das Bodenteil ist dabei Bestandteil des Gehäuses selbst.

Ferner offenbart die EP-A-0 240 916 ein Installationsgerät für Leitungsführungskanäle, wobei das Gehäuse des Installationsgerätes aus einem Unterteil und einem über ein Filmscharnier angelenkten Deckel besteht und unmittelbar in einer Nut an der Rückwand des Leitungsführungskanals montiert wird.

Der vorliegenden Erfindung liegt die Aufgabe zugrunde, ein Elektro-Installationsgerät zu schaffen, welches sehr universell für verschiedene Arten von Aufnahmegehäusen bzw. Bodenhalteprofilen geeignet sowie besonders einfach und schnell montierbar ist.

Erfindungsgemäß wird dies durch ein Elektro-Installationsgerät mit den Merkmalen des Anspruchs 1 erreicht. Vorteilhafte Weiterbildungen und besondere Ausführungsformen der Erfindung sind Gegenstand der abhängigen Ansprüche.

Erfindungsgemäß besteht somit das Gerätegehäuse aus zwei Gehäuseteilen, und zwar einem Unterteil und einem Oberteil, die einseitig einstückig über Filmscharniere klappbar miteinander verbunden sowie auf der gegenüberliegenden Seite im zusammengeklappten Zustand lösbar miteinander verbindbar sind. Durch diese Ausgestaltung ist das erfindungsgemäße Installationsgerät sehr einfach und wirtschaftlich herstellbar, indem das Gerätegehäuse als einteiliges Kunststoff-Formteil, also in nur einem Formvorgang, hergestellt werden kann. Es braucht dann nur noch mit bestimmten Funktions- bzw. Kontaktelementen bestückt und schließlich durch einfaches Zusammenklappen der beiden Gehäuseteile geschlossen zu werden. Aufgrund der Klappbarkeit ist auch die eigentliche Montage des Installationsgerätes beispielsweise in einem Kabelkanal schnell und einfach durchführbar.

In vorteilhafter Ausgestaltung ist zudem vorgesehen, daß auch die Grundplatte mit dem Gerätegehäuse entsprechend einstückig und klappbar verbunden ist, wobei vorzugsweise eine klappbare Zick-Zack-Anordnung der drei Teile (Grundplatte, Gehäuse-Unterteil und -Oberteil) vorgesehen ist. Alternativ kann aber auch eine separate Grundplatte vorgesehen sein.

Das erfindungsgemäße Elektro-Installationsgerät ist speziell für die Montage in solchen Aufnahmegehäusen konzipiert, die aus hintergreifbaren Stegen bestehende Bodenhalteprofile aufweisen. Hierzu besteht das erfindungsgemäße Installationsgerät aus einer lösbar mit dem jeweiligen Bodenhalteprofil verbindbaren Grundplatte und dem auf der Grundplatte fixierbaren, elektrische Funktions- bzw. Kontaktelemente enthaltenden Gerätegehäuse, wobei die Grundplatte für die Befestigung an dem jeweiligen Bodenhalteprofil mindestens ein auswechselbares Halteteil aufweist. Vorzugsweise weist die Grundplatte zwei Halteteile auf, die jeweils formschlüssig in einer von zwei in Verlaufsrichtung des Bodenhalteprofils gegenüberliegenden Halteteil-Aufnahmen der Grundplatte sitzen. Die Halteteile bilden praktisch "Adapterstücke", die an das jeweilige Bodenhalteprofil angepaßt sind, dabei aber bezüglich ihrer Verbindung mit der Grundplatte jeweils im wesentlichen gleich ausgebildet sind. Dies führt zu der angestrebten universellen Einsatzmöglichkeit bei gleichzeitig einfacher Montage; denn es braucht lediglich die Grundplatte mechanisch befestigt und dann nach elektrischem Anschluß von Verbindungskabeln das Gerätegehäuse auf der Grundplatte fixiert zu werden, was bevorzugt durch einfaches und schnelles Verrasten erfolgt.

Das erfindungsgemäße Installationsgerät stellt praktisch eine Art "Baukastensystem" dar, wobei nahezu beliebige Gerätearten oder Gerätekombinationen auf einfache Weise über die Grundplatte montiert werden können.

Dabei ist es besonders vorteilhaft, wenn die Grundplatte auch eine - insbesondere schraubenlose - Anschlußeinheit zum Anschluß von Verbindungskabeln aufweist, wobei dann zweckmäßigerweise die innerhalb des Gerätegehäuses angeordneten elektrischen Kontaktelemente über eine Steckverbinderanordnung mit der Anschlußeinheit verbunden werden, und zwar vorteilhafterweise "automatisch" bei dem mechanischen Fixieren des Gerätegehäuses auf der Grundplatte. Bei dieser bevorzugten Ausführungsform der Erfindung bildet somit die Grundplatte eine kombinierte Befestigungs- und Anschlußeinheit, die eine besonders einfache und schnelle Montage ermöglicht, indem das jeweilige Gerätegehäuse lediglich aufgesteckt zu werden braucht. Die Halterung bzw. Fixierung des Gerätegehäuses an der Grundplatte erfolgt dann vorzugsweise über Rastverbindungen.

Das "Baukastensystem" wird bevorzugt noch dadurch ergänzt, daß das Gerätegehäuse lösbar mit bestimmten Geräteeinsätzen, wie insbesondere Steckdoseneinsätzen, verbindbar ist. Dies schafft die Möglichkeit, eine einfache Anpassung an verschiedene Steckdosensysteme (z. B. Schuko, CEE oder dergleichen) zu schaffen, indem lediglich die Einsätze ausgetauscht zu werden brauchen. Zudem ist es dabei auch auf einfache Weise möglich, ein bestimmtes Programm bzw. Design (Form, Farbe usw.) vorzusehen, indem nur die von außen sichtbaren Teile (Geräteeinsätze) programmspezifisch ausgebildet zu sein brauchen, das Basis-Gerätegehäuse und die Grundplatte aber einheitlich universell einsetzbar bleiben. Zudem kann ein steckbarer Überspannungsmodul vorgesehen sein, welcher je nach Bedarf auf einfache Weise montiert werden kann.

Anhand der beiliegenden Zeichnungen wird nun die Erfindung beispielhaft näher erläutert werden. Dabei zeigen:
- Fig. 1: eine perspektivische Explosionsdarstellung eines erfindungsgemäßen Installationsgerätes in einer ersten Ausführungsform,
- Fig. 2: eine Seitenansicht in Pfeilrichtung II gemäß Fig. 1 auf das fertig montierte Installationsgerät,
- Fig. 3: eine Ansicht analog zu Fig. 2, jedoch in einer sich insbesondere bezüglich der Halteteile unterscheidenden Ausführungsform,
- Fig. 4: eine Ansicht von zusätzlichen Teilen des Installationsgerätes in Pfeilrichtung II gemäß Fig. 1,
- Fig. 5: eine Ansicht analog zu Fig. 4 in einer Ausführungsvariante,
- Fig. 6: die Hauptkomponenten des erfindungsgemäßen Installationsgerätes in einer zu Fig. 2 etwa analogen Ansicht zur Veranschaulichung einer speziellen Verbindungsart der Teile,
- Fig. 7: eine Ansicht in Pfeilrichtung VII gemäß Fig. 6 auf die "geöffneten" Hauptkomponenten des erfindungsgemäßen Installationsgerätes,
- Fig. 8: eine Ansicht in Pfeilrichtung VIII gemäß Fig. 6 auf die "geöffneten" Hauptkomponenten,
- Fig. 9: einen Schnitt durch ein Gehäuseteil in der Schnittebene IX-IX gemäß Fig. 8,
- Fig. 10: eine Seitenansicht eines von mehreren Kontaktelementen in seinem demontierten Zustand außerhalb des Gerätegehäuses,
- Fig. 11: eine Draufsicht auf das Kontaktelement im eingesetzten Zustand in Pfeilrichtung XI gemäß Fig. 9 bzw. Fig. 10,
- Fig. 12: einen vergrößerten Schnitt in der Schnittebene XII-XII in Fig. 11 mit zusätzlicher Darstellung von Fügewerkzeugen zur Erläuterung einer speziellen Fügetechnik,
- Fig. 13: eine weitere, bevorzugte Ausführungsform des erfindungsgemäßen Installationsgerätes in einer perspektivischen Explosionsdarstellung ähnlich Fig. 1.

In den verschiedenen Figuren der Zeichnung sind gleiche Teile stets mit den gleichen Bezugszeichen versehen, so daß jede eventuell nur einmal unter Bezugnahme auf eine der Zeichnungsfiguren vorkommende Beschreibung eines Teils analog auch bezüglich der anderen Zeichnungsfiguren gilt, in denen dieses Teil mit dem entsprechenden Bezugszeichen ebenfalls zu erkennen ist.

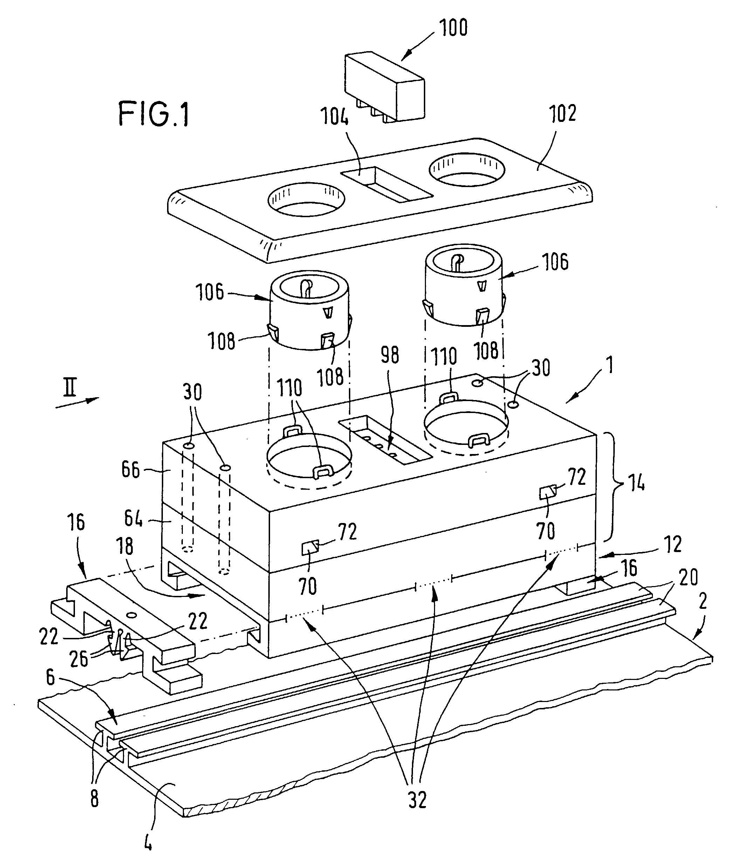

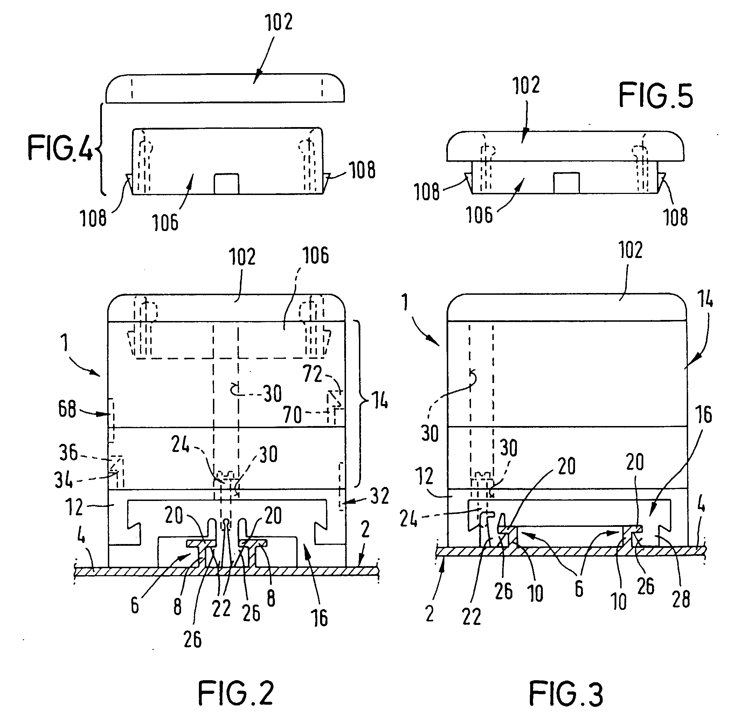

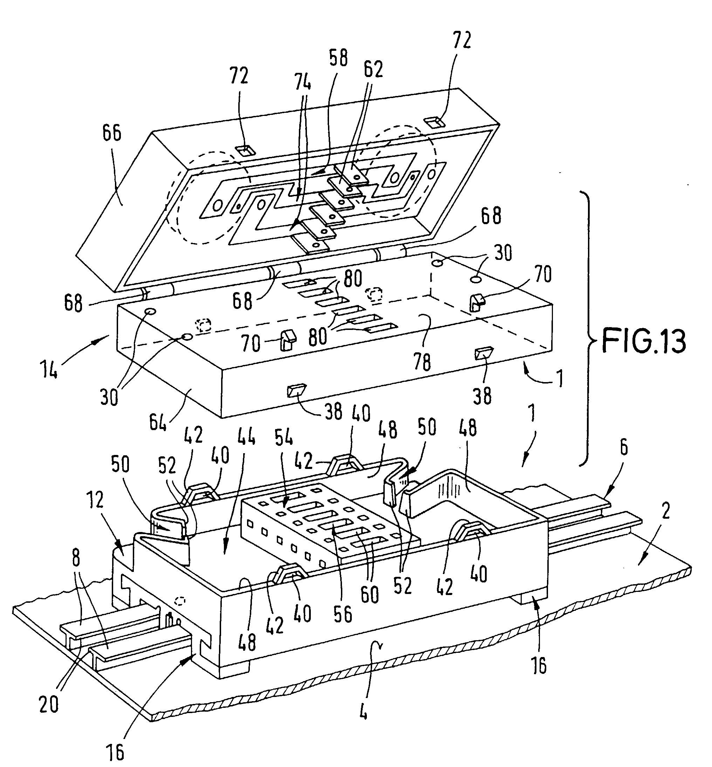

Ein erfindungsgemäßes Elektro-Installationsgerät 1 eignet sich zur Montage in solchen Aufnahmegehäusen 2 (in den Fig. 1, 2, 3 und 13 jeweils lediglich bereichsweise dargestellt), die innenseitig auf einem Boden 4 jeweils ein an sich bekanntes Bodenhalteprofil 6, auch "Hutschiene" genannt, aufweisen. Im dargestellten Ausführungsbeispiel nach Fig. 1 und 2 und auch im Ausführungsbeispiel nach Fig. 13 besteht das Bodenhalteprofil 6 aus zwei parallel verlaufenden, im Querschnitt T-förmigen Haltestegen 8. Im Ausführungsbeispiel nach Fig. 3 besteht das Bodenhalteprofil 6 demgegenüber aus zwei parallel verlaufenden, im Querschnitt umgedreht L-förmigen und bevorzugt nach außen weisenden Haltestegen 10. Darüber hinaus sind noch andere Ausgestaltungen des Bodenhalteprofils 6 denkbar.

Das Aufnahmegehäuse 2 ist bevorzugt als Kabelkanal bzw. sogenannter Brüstungskanal ausgebildet, es kann sich jedoch auch um ein Unterflurgehäuse, einen Verteilerschrank oder Schaltschrank handeln. Aus diesem Grund ist von dem Aufnahmegehäuse 2 lediglich der Bereich des Bodenhalteprofils 6 angedeutet.

In den dargestellten Ausführungsbeispielen ist das erfindungsgemäße Installationsgerät 1 als Steckdose, und zwar speziell Doppelsteckdose, ausgebildet, die Erfindung eignet sich jedoch ebenfalls für beliebige andere elektrische Installationsgeräte, wie Schalter, Taster oder dergleichen, sowie auch für Geräte, die in der Kommunikationstechnik eingesetzt werden.

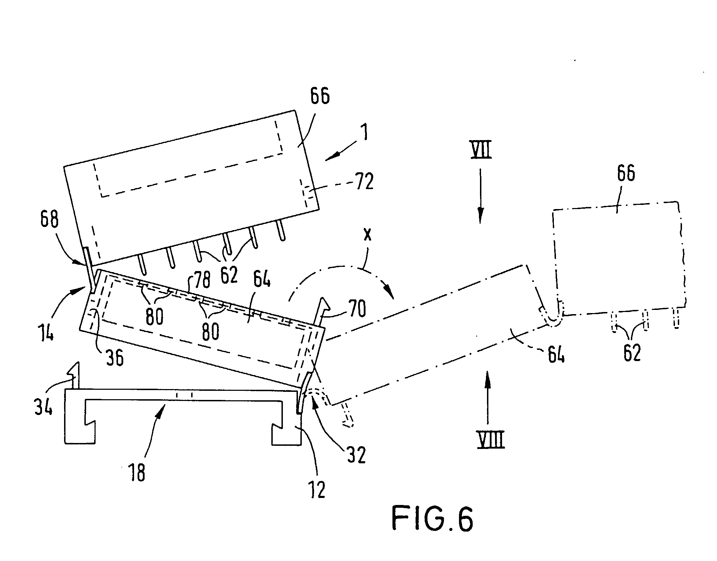

Erfindungsgemäß besteht nun das Installationsgerät 1 aus im wesentlichen zwei Hauptkomponenten, und zwar aus einer lösbar mit dem jeweiligen Bodenhalteprofil 6 des Aufnahmegehäuses 2 verbindbaren Grundplatte 12 und einem auf der Grundplatte 12 fixierbaren, bestimmte elektrische Funktions- bzw. Kontaktelemente enthaltenden Gerätegehäuse 14. Hierbei weist die Grundplatte 12 für die Befestigung an dem Bodenhalteprofil 6 erfindungsgemäß mindestens ein auswechselbares Halteteil 16 auf. Vorzugsweise weist die Grundplatte 12 allerdings zwei Halteteile 16 auf, die dann bevorzugt jeweils formschlüssig in einer von zwei in Verlaufsrichtung des Bodenhalteprofils 6 gesehen gegenüberliegenden Halteteil-Aufnahmen 18 der Grundplatte 12 sitzen (siehe insbesondere Fig. 1 und 6). Dabei besteht zwischen dem in der Aufnahme 18 sitzenden Halteteil 16 und der Grundplatte 12 bevorzugt eine insbesondere schwalbenschwanzartige Formschlußverbindung (siehe Fig. 2 und 3). Die Grundplatte 12 ist vorzugsweise rechteckig ausgebildet, wobei ihre Längserstreckung mit der Verlaufsrichtung des Bodenhalteprofils 6 übereinstimmt, und wobei die Halteteile 16 an den beiden Schmalseiten der Grundplatte 12 angeordnet sind.

Erfindungsgemäß kann nun in jede Halteteil-Aufnahme 18 eines von mehreren unterschiedlich ausgebildeten Halteteilen 16 in Anpassung an das jeweilige Bodenhalteprofil 6 eingesetzt werden. Wie sich vor allem aus Fig. 2 und 3 ergibt, weist jedes Halteteil 16 mindestens einen in Querrichtung des Bodenhalteprofils 6 gesehen federelastisch beweglichen, einen Profilsteg 20 des Bodenhalteprofils 6 formschlüssig oder zumindest kraftformschlüssig hintergreifenden Haltearm 22 auf, dem eine Arretierschraube 24 zugeordnet ist, die senkrecht zur Ebene des Bodens 4 des Aufnahmegehäuses 2 derart in den Bereich neben dem Haltearm 22 einschraubbar ist, daß hierdurch der Haltearm 22 in seiner den Profilsteg 20 hintergreifenden Stellung fixierbar ist. Dies bedeutet, daß durch die Arretierschraube 24 jeweils die federelastische Beweglichkeit des Haltearms 22 unterbunden wird, so daß dann jedenfalls eine formschlüssige Verbindung zwischen dem Halteteil 16 und dem Bodenhalteprofil 6 erreicht wird.

In dem in Fig. 2 veranschaulichten Ausführungsbeispiel weist das bzw. jedes der beiden Halteteile 16 zwei mit geringem Abstand etwa parallel verlaufende Haltearme 22 mit einander abgekehrten, d.h. in entgegengesetzten Richtungen nach außen weisenden Rastnasen 26 auf. Diese beiden Haltearme 22 greifen zwischen die T-förmigen Haltestege 8 des Bodenhalteprofils 6 ein, wobei die Rastnasen 26 jeweils die waagerechten Profilstege 20 hintergreifen. Beiden Haltearmen 22 ist hierbei die gleiche Arretierschraube 24 zugeordnet, indem diese zum Fixieren der beiden Rastarme 22 in den zwischen diesen liegenden Bereich einschraubbar ist. Hierdurch werden die Haltearme 22 nach außen gespreizt bzw. in ihrer gespreizten, die Profilstege 20 hintergreifenden Lage gehalten.

Gemäß Fig. 3 weist jedes Halteteil 16 einen federelastischen Haltearm 22 und einen von diesem in Querrichtung des Bodenhalteprofils 6 beabstandeten, im wesentlichen starren, formstabilen Halteansatz 28 auf. Der Halteansatz 28 und der Haltearm 22 weisen dabei jeweils eine Rastnase 26 auf, die vorzugsweise einander zugekehrt sind und hierdurch die nach außen weisenden Profilstege 20 des Bodenhalteprofils 6 hintergreifen können. Hierbei ist nur dem Haltearm 22 eine Arretierschraube 24 zugeordnet, die in den dem Profilsteg 20 gegenüberliegenden Bereich neben den Haltearm 22 einschraubbar ist, um so den Haltearm 22 zu arretieren.

Zur Montage werden zunächst die Halteteile 16 in die Aufnahmen 18 der Grundplatte 12 eingesetzt. Die Grundplatte 12 kann dann mit den Halteteilen 16 auf das Bodenhalteprofil 6 aufgerastet werden. Es erfolgt dann die Arretierung durch Einschrauben der Arretierschrauben 24. Danach erfolgt - wie im folgenden noch genauer beschrieben werden wird - der elektrische Anschluß und das Fixieren des Gerätegehäuses 14 auf der Grundplatte 12.

Um nachfolgend die Arretierschrauben 24 zum Lösen betätigen zu können, ist es vorteilhaft, wenn die Grundplatte 12 sowie auch das Gerätegehäuse 14 jeweils gleichachsig mit den Arretierschrauben 24 verlaufende, fluchtende Durchgangslöcher 30 zum Durchführen eines Schraubendrehers oder dergleichen Werkzeug aufweisen. Die Arretierschrauben 24 greifen hierbei jeweils in ein Gewindeloch des jeweiligen Halteteils 16 ein. Wie sich unter anderem aus Fig. 1 ergibt, sind hierbei mehrere Durchgangslöcher 30 in unterschiedlichen, an die verschiedenen Halteteile 16 angepaßten Anordnungen vorgesehen, damit das erfindungsgemäße Installationsgerät 1 wahlweise mit jedem beliebigen Halteteil 16 kombiniert werden kann. Hierbei sind zusätzlich zu den dargestellten Ausführungsbeispielen der Halteteile 16 auch andere Ausführungsformen denkbar, die ebenfalls im Bereich der Erfindung liegen.

In der in den Fig. 1 bis 8 veranschaulichten Ausführungsform des Installationsgerätes 1 sind die Grundplatte 12 und das Gerätegehäuse 14 einseitig, und zwar vorzugsweise im Bereich einer Längsseite, einstückig insbesondere über Filmscharniere 32 klappbar miteinander verbunden, und auf der gegenüberliegenden Seite, insbesondere Längsseite, sind das Gerätegehäuse 14 und die Grundplatte 12 im zusammengeklappten Zustand miteinander lösbar verbindbar, vorzugsweise verrastbar. Hierzu ist vorzugsweise vorgesehen, daß die Grundplatte 12 Rastansätze 34 aufweist, die jeweils in entsprechende Rastausnehmungen 36 des Gerätegehäuses 14 eingreifen. Dies läßt sich insbesondere in Fig. 2 und 6 leicht nachvollziehen.

In Fig. 13 ist eine alternative Ausführungsform veranschaulicht, wobei die Grundplatte 12 und das Gerätegehäuse 14 als separate, miteinander lösbar verbindbare, insbesondere verrastbare Teile ausgebildet sind. Im dargestellten Beispiel greift hierzu das Gerätegehäuse 14 mit nasenartigen Rastansätzen 38 in Rastausnehmungen 40 der Grundplatte 12 ein, wobei die Rastausnehmungen 40 vorzugsweise durch bügelartige Ansätze 42 gebildet sind, wodurch vorteilhafterweise ein Lösen der Rastverbindung durch Wegbiegen der Ansätze 42 möglich ist. Wie in Fig. 13 dargestellt ist, sind vorzugsweise an jeder der beiden Längsseiten des Installationsgerätes 1 zwei solche Rastverbindungen vorgesehen.

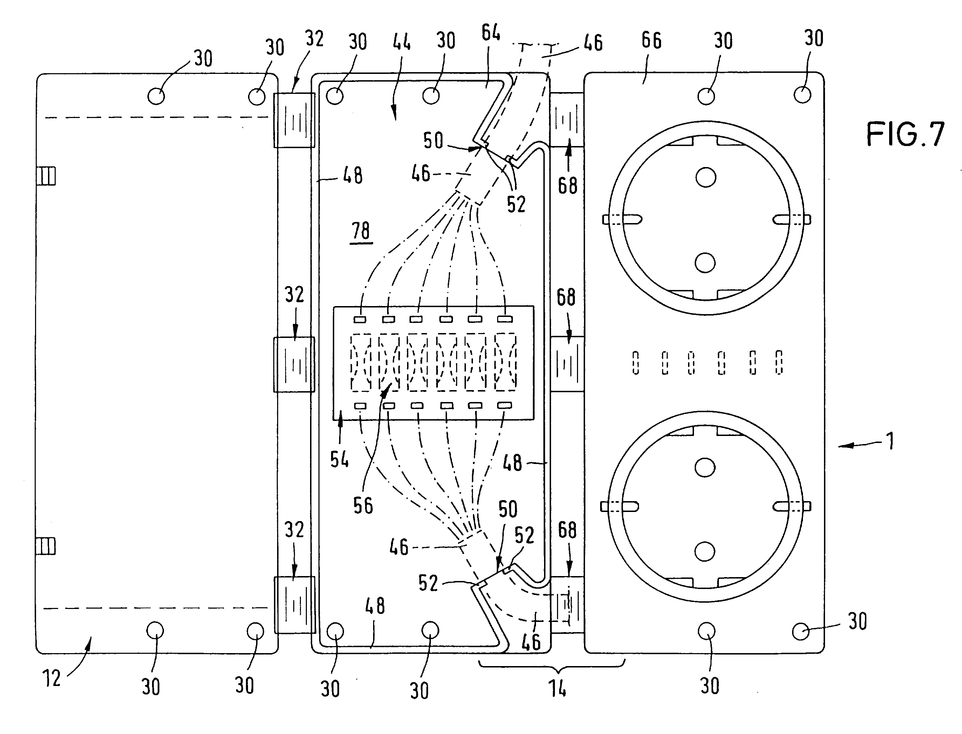

Es ist nun ferner vorteilhaft, wenn im Bereich zwischen der Grundplatte 12 und dem Gerätegehäuse 14 ein Raum 44 zum Zuführen und zum Anschluß von elektrischen Verbindungskabeln 46 (vergleiche Fig. 7) gebildet ist. Dieser Anschlußraum 44 wird durch senkrechte Wandungsstege 48 entweder der Grundplatte 12 - siehe Fig. 13 - oder des Gerätegehäuses 14 - siehe die Ausführung nach Fig. 1 bis 8, insbesondere Fig. 7 - gebildet.

Zur zugentlastenden Halterung der in den Anschlußraum 44 eingeführten Verbindungskabel 46 sind im Bereich zwischen der Grundplatte 12 und dem Gerätegehäuse 14 vorzugsweise Zugentlastungsaufnahmen 50 zum Einstecken und einklemmenden Haltern der Verbindungskabel 46 gebildet. Diese Zugentlastungsaufnahmen 50 sind hierbei jeweils zwischen Ansätzen 52 der Grundplatte 12 (Fig. 13) oder des Gerätegehäuses 14 (Fig. 7) gebildet, wobei diese Ansätze 52 bevorzugt einheitlich mit den Wandungsstegen 48 ausgebildet sind. Hierbei ist es vorteilhaft, wenn die Zugentlastungsaufnahmen 50 sich in Einsteckrichtung der Verbindungskabel 46 geringfügig so verengen, daß Kabel mit verschiedenen Durchmessern klemmend gehaltert werden können. Zudem ist es besonders vorteilhaft, wenn - siehe hierzu insbesondere Fig. 7 - die Zugentlastungsaufnahmen 50 derart ausgebildet bzw. ausgerichtet sind, daß die Verbindungskabel 46 jeweils mit einem - bezogen auf die Verlaufsrichtung des Bodenhalteprofils 6 - schräg in einem Winkel zwischen 0 und 90°, insbesondere etwa 40 bis 50°, ausgerichteten Verlauf in die Zugentlastungsaufnahmen 50 einführbar sind. Hierdurch ergibt sich die vorteilhafte Möglichkeit, die Verbindungskabel 46 dem erfindungsgemäßen Installationsgerät 1 wahlweise in Verlaufsrichtung des Bodenhalteprofils 6 zuzuführen oder aber in Querrichtung dazu. In Fig. 7 ist die "Längszuführung" im oberen Bereich der Zeichnungsfigur veranschaulicht, während die "Querzuführung" im unteren Bereich angedeutet ist. Aufgrund der wahlweise möglichen Querzuführung ist es vorteilhafterweise möglich, jeweils zwei erfindungsgemäße Installationsgeräte 1 unmittelbar aneinander angrenzend zu montieren. Es können so beliebige Kombinationen in Reihenanordnung realisiert werden.

In der bevorzugten Ausführungsform nach Fig. 13 weist die Grundplatte 12 innerhalb des Anschlußraums 44 eine Anschlußeinheit 54 für den elektrischen Anschluß der Verbindungskabel 46 auf. Hierbei handelt es sich bevorzugt um einen "Anschlußblock" mit insbesondere schraubenlosen Anschlußklemmen in an sich bekannter Ausführung. Dabei ist eine Leiter-Einführrichtung von der Seite und/oder von oben möglich. Die Anschlußeinheit 54 ist vorzugsweise über eine Steckverbinderanordnung 56 mit innerhalb des Gerätegehäuses 14 angeordneten Kontaktelementen 58 verbunden bzw. verbindbar. Im dargestellten Ausführungsbeispiel weist die Anschlußeinheit 54 Kontaktbuchsen 60 zum Einstecken von Steckerzungen 62 der Kontaktelemente 58 auf. Bei dieser Ausführungsform nach Fig. 13 bildet somit die Grundplatte 12 eine kombinierte Befestigungs- und Anschlußeinheit.

Bei der Ausführung nach Fig. 1 bis 8 weist demgegenüber das Gerätegehäuse 14 eine Anschlußeinheit auf, die im dargestellten Beispiel weitgehend der bereits erläuterten Anschlußeinheit 54 entspricht. Alternativ hierzu ist es jedoch ebenfalls möglich, die mit Steckerteilen vorkonfektionierten Verbindungskabel 46 unmittelbar mit den Kontaktelementen 58 bzw. den Steckerzungen 62 zu verbinden.

In allen dargestellten Ausführungsformen besteht das Gerätegehäuse 14 zweckmäßigerweise aus zwei Gehäuseteilen, und zwar aus einem Unterteil 64 und einem Oberteil 66. Vorzugsweise sind hierbei das Unterteil 64 und das Oberteil 66 einseitig (insbesondere an einer Längsseite) einstückig über Filmscharniere 68 klappbar miteinander verbunden, während sie auf der gegenüberliegenden (Längs-) Seite im zusammengeklappten Zustand lösbar miteinander verbindbar, insbesondere verrastbar, sind. Hierfür sind entsprechende Rastansätze 70 und Rastausnehmungen 72 vorgesehen. Im Falle der "Klappverbindung" zwischen der Grundplatte 12 und dem Gerätegehäuse 14 (Fig. 1 bis 8) sind die Grundplatte 12 und das Oberteil 66 zweckmäßigerweise auf gegenüberliegenden Seiten des Unterteils 64 mit diesem verbunden (Filmscharniere 32 und 68), so daß sich insgesamt eine "ziehharmonikaartige" Klappanordnung (Zick-Zack-Anordnung) der drei Teile - Grundplattte 12, Unterteil 64 und Oberteil 66 - ergibt (siehe Fig. 6-8).

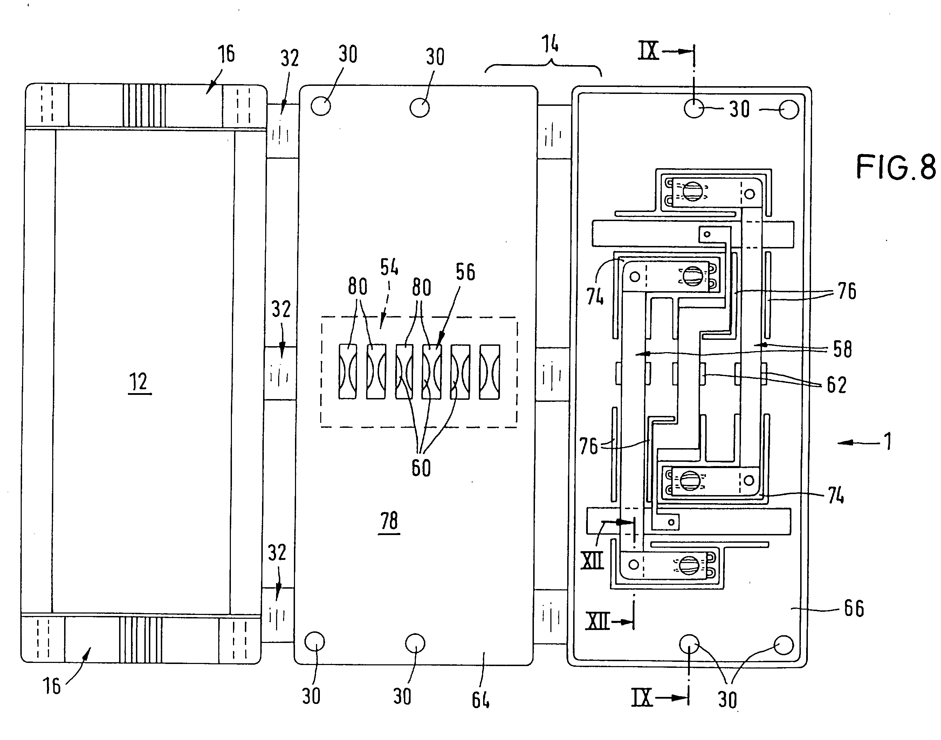

Das Oberteil 66 des Gerätegehäuses 14 - siehe hierzu insbesondere Fig. 8 und 13 - weist zur Aufnahme der Kontaktelemente 58 labyrinthartige Aufnahmen 74 auf, die jeweils durch stegartige Wandungen 76 gebildet bzw. begrenzt sind. Diese Aufnahmen 74 sind zum Einsetzen der Kontaktelemente 58 in Richtung des Unterteils 64 offen und werden dann nach dem Einsetzen der Kontaktelemente 58 und nach Verrasten von Ober- und Unterteil 66, 64 durch eine Bodenwandung 78 des Unterteils 64 verschlossen. Diese Bodenwandung 78 besitzt Öffnungen 80, durch die sich die Steckerzungen 62 der Kontaktelemente 58 erstrecken. Somit sind die Steckerzungen 62 zum Anschluß der Verbindungskabel 46 zugänglich, und zwar entweder direkt oder aber über die Anschlußeinheit 54.

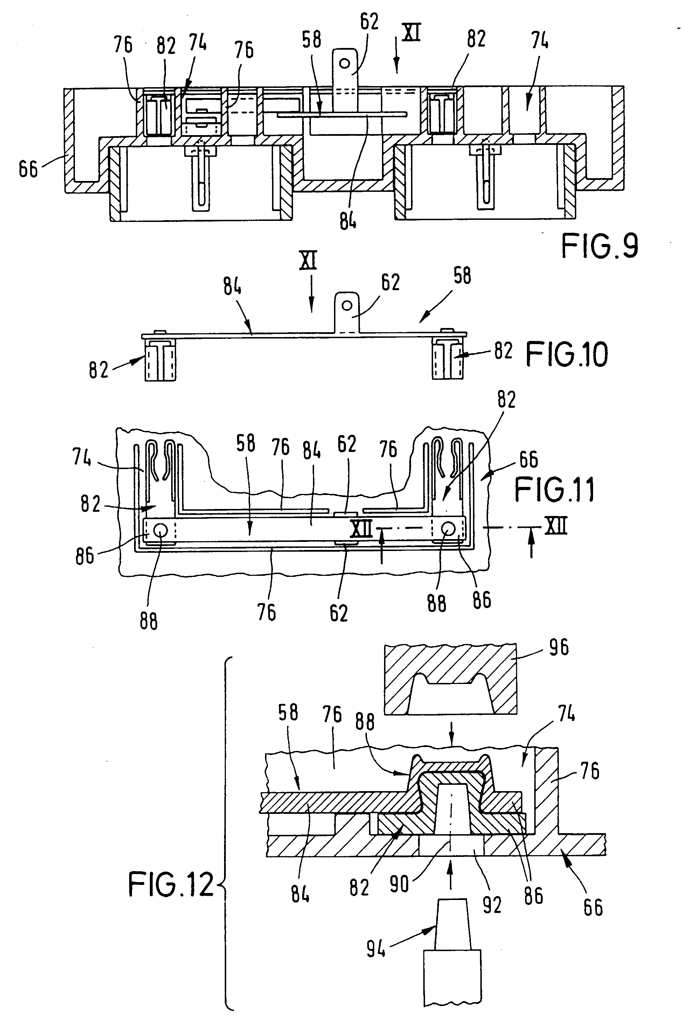

Wie sich nun vor allem aus Fig. 8 bis 13 ergibt, sind die Kontaktelemente 58 jeweils als aus Metallblech, insbesondere Messingblech, bestehende Kontaktbrücken mit mindestens zwei Kontaktteilen 82 und einem diese mechanisch und elektrisch verbindenden Brückenelement 84 ausgebildet (siehe insbesondere Fig. 10 und 11). Hierbei ist es nun besonders vorteilhaft, wenn die Kontaktteile 82 und das zugehörige Brückenelement 84 als gesonderte Teile ausgebildet und jeweils in sich überlappend aufeinanderliegenden Verbindungsbereichen 86 über Durchsetzfügungen 88 unmittelbar formschlüssig miteinander verbunden sind. Hierbei handelt es sich somit praktisch um ein "Nieten ohne Niet", da keine gesonderten Verbinderelemente, wie Niete oder dergleichen, erforderlich sind. Das Gerätegehäuse 14, und zwar dessen Oberteil 66, weist im Bereich der Durchsetzfügungen 88 jeweils eine zur Fügeachse 90 (siehe Fig. 12) koaxiale Öffnung 92 zum Einführen eines von zwei die jeweilige Durchsetzfügung 88 erzeugenden Fügewerkzeugen auf - siehe Fig. 12. Bei diesen Fügewerkzeugen handelt es sich einerseits um einen Rundstempel 94 sowie andererseits um eine zugehörige Matrize 96. Wie in Fig. 12 veranschaulicht ist, wird bevorzugt der Rundstempel 94 durch die Gehäuseöffnung 92 geführt, während die gegenüberliegende Seite des Gehäuse-Oberteils 66 ja als Verbindungsseite zu dem Unterteil 64 zunächst noch offen ausgebildet ist, so daß hier die Matrize 96 zugeführt werden kann.

Die Öffnungen 92 können abschließend mit nicht dargestellten, beispielsweise stopfenartigen Verschlußelementen verschlossen oder aber durch andere Teile, z. B. eine Abdeckplatte, abgedeckt werden.

Die Kontaktteile 82 können praktisch beliebig ausgebildet sein, beispielsweise als Schaltkontaktteile, Steckerkontaktteile oder - wie bei der dargestellten Ausführung des Installationsgerätes 1 als Steckdose - als Buchsenkontaktteile, die aus zwei gegeneinander wirkenden Kontaktfederarmen bestehen, zwischen die jeweils ein Steckerstift einsteckbar ist.

Diese bevorzugte Maßnahme der zunächst mehrteiligen Kontaktelemente 58 führt zu entscheidenden Vorteilen. So sind die Einzelteile der Kontaktelemente 58 konstruktiv sehr einfach und preiswert herzustellen, und auch die Montage ist sehr wirtschaftlich. Die gesonderten Teile (Kontaktteile 82, Brückenelement 84) werden jeweils in die entsprechende Aufnahme 74 des Gehäuse-Oberteils 66 an der entsprechenden Stelle einzeln eingesetzt. Sie liegen dann jeweils mit ihren Verbindungsbereichen 86 "lose" aufeinander. In dem so eingesetzten und in der Aufnahme 74 fixierten Zustand werden die Teile (82,84) dann jeweils in den Verbindungsbereichen 86 im Durchsetzfügeverfahren unmittelbar formschlüssig miteinander verbunden. Hierzu werden die Matrize 96 und der Rundstempel 94 auf der Fügeachse 90 gegeneinander bewegt, wodurch die Blech-Verbindungsbereiche 86 derart gemeinsam in eine Öffnung der Matrize 90 gepreßt werden, daß durch "Hinterfließen" eine direkte formschlüssige Verbindung entsteht. Dies dürfte anhand der Fig. 12 leicht nachvollziehbar sein.

Die "Einzelteile" der Kontaktelemente 58 können sehr einfach hergestellt (gebogen) werden, jedenfalls einfacher, als wenn sie sofort einstückig miteinander verbunden wären. Dies bedeutet, daß es sich bei den Einzelteilen um sehr viel einfachere (Biege-) Teile handelt, wobei insbesondere das Brückenelement 84 sogar in einer flachen, nicht gebogenen Form ausgebildet sein kann (vgl. Fig. 10). Zudem ist auch das erfindungsgemäße einzelne Einsetzen der Einzelteile sehr unproblematisch, denn es muß lediglich gewährleistet sein, daß jedes Einzelteil in den ihm zugeordneten Bereich der Gehäuse-Aufnahme 74 hineinpaßt; zwischen den Einzelteilen können dann ohne weiteres Abweichungen in der relativen Lage auftreten, denn die Verbindungsbereiche der einzelnen Kontakt- und Brückenelemente 82, 84 liegen ja zunächst lose aufeinander, so daß Maß- bzw. Lageabweichungen selbsttätig ausgeglichen werden. Erfindungsgemäß werden erst dann, d.h. in dem eingesetzten und dadurch genau lagebestimmten Zustand, die Teile miteinander verbunden, so daß die dadurch entstehenden, fertigen Kontaktelemente 58 stets optimal in die Aufnahmen 74 des Gehäuses hineinpassen. Dabei ist auch das - an sich bekannte - Durchsetzfügeverfahren besonders vorteilhaft, da die Verbindungsstellen bzw. -punkte nicht vorher hinsichtlich ihrer Lage genau festgelegt werden müssen, wie dies z. B. bei Nietverbindungen oder dergleichen der Fall wäre.

Denn bei dem Durchsetzfügeverfahren werden flach aufeinanderliegende Bleche dadurch miteinander verbunden, daß die Bleche gemeinsam durch einen Rundstempel in eine Matrize gepreßt werden, wobei das stempelseitige Material gezwungen wird, "innerhalb" des matrizenseitigen Materials nach außen zu hinterfließen. Diese Durchsetzfügungen bieten gerade für den vorliegenden Anwendungsfall besondere Vorteile, da es sich um sehr gasdichte und daher korrosionsgeschützte Verbindungen handelt, die somit - zusätzlich zu einer sehr guten mechanischen Festigkeit - auch sehr gute elektrische Eigenschaften, insbesondere einen dauerhaft geringen Übergangswiderstand, aufweisen. Zudem handelt es sich um ein "kaltes" Verbindungsverfahren, so daß thermische Beschädigungen des aus Kunststoff bestehenden Gerätegehäuses 14 ausgeschlossen sind. Zudem ergibt sich durch diese erfindungsgemäße Maßnahme vorteilhafterweise auch die Möglichkeit für eine Vereinheitlichung der Kontaktteile 82, d.h. alle bzw. mehrere Kontaktteile können praktisch gleich ausgebildet und dann lediglich mit unterschiedlichen Brückenelementen 84 verbunden werden. Auch dies stellt einen wesentlichen Vorteil für die Fertigung und Lagerhaltung dar.

Wie sich nun des weiteren aus Fig. 1 ergibt, weist das Gerätegehäuse 14 vorzugsweise eine Aufnahmeöffnung 98 mit entsprechenden elektrischen Kontaktelementen zum Einstecken eines Überspannungsmoduls 100 auf. Dieser überspannungsmodul 100 kann wahlweise bzw. im Bedarfsfalle durch einfaches Einstecken in die Aufnahmeöffnung 98 montiert werden. Der Überspannungsmodul 100 dient in an sich bekannter Weise zum Abbau von Überspannungen. Eine Abdeckplatte 102 besitzt dann eine entsprechende Durchführöffnung 104 für den Überspannungsmodul 100. Wird der Überspannungsmodul 100 nicht benötigt, so kann natürlich eine Abdeckplatte ohne die Öffnung 104 verwendet werden.

Gemäß Fig. 1 ist es ferner besonders vorteilhaft, wenn das Gerätegehäuse 14 lösbar mit mindestens einem topfartigen Steckdoseneinsatz 106 (z. B. sogenannter "schuko-Topf") verbindbar ist. Hierdurch ergibt sich die Möglichkeit zur Anpassung einerseits an verschiedene Steckdosen-Systeme, z. B. Schuko, CEE oder dergleichen. Andererseits kann das erfindungsgemäße Installationsgerät 1 auch auf sehr einfache Weise entsprechend dem jeweils gewünschten Installationsprogramm bzw. Design (Form, Farbe) zusammengesetzt werden. Hierzu brauchen lediglich die "programmspezifischen" Teile (Steckdoseneinsätze 106, Abdeckplatte 102) baukastenartig mit dem Gerätegehäuse 14 verbunden zu werden. Zur Verbindung der Steckdoseneinsätze 106 mit dem Gerätegehäuse 14 sind bevorzugt jeweils Rastverbindungen mit Rastansätzen 108 und Rastbügeln 110 vorgesehen.

Auch die Abdeckplatte 102 ist bevorzugt mit dem Gerätegehäuse 14 verrastbar. Hierbei können - siehe Fig. 1, 2 und 4 - die Abdeckplatte 102 und die Steckdoseneinsätze 106 jeweils als separate Teile ausgebildet sein. Alternativ hierzu können gemäß Fig. 3 und 5 die Steckdoseneinsätze 106 auch einstückig mit der Abdeckplatte 102 ausgeführt sein.

Jeder Steckdoseneinsatz 106 kann zweckmäßigerweise mit einer üblichen Kindersicherung ausgestattet sein (nicht dargestellt).

Aufgrund der beschriebenen Ausgestaltung des erfindungsgemäßen Elektro-Installationsgerätes 1 ist dieses außerordentlich einfach und schnell zu montieren. Beispielsweise wird für die Montage in Kabel- bzw. Brüstungskanälen jeweils ein Installationsgerät 1 an einer gewünschten Stelle in den Kanal eingesetzt und über die Halteteile 16 der Grundplatte 12 auf dem Bodenhalteprofil 6 fixiert. Es werden dann die Verbindungskabel 46 eingelegt und an der Anschlußeinheit 54 oder direkt an den Kontaktelementen 58 elektrisch angeschlossen. Die Kabelenden werden in die Zugentlastungsaufnahmen 50 hineingedrückt. Es braucht dann lediglich noch das Gerätegehäuse 14 auf der Grundplatte 12 fixiert (verrastet) zu werden. Erforderlichenfalls kann dann der Überspannungsmodul 100 gesteckt werden. Die Steckdoseneinsätze 106 können bereits werksseitig vormontiert sein, oder sie brauchen am Montageort lediglich aufgesteckt bzw. aufgerastet zu werden. Abschließend braucht lediglich noch die Abdeckplatte 102 mit dem Gerätegehäuse 14 verrastet zu werden.

## Patentansprüche

1. Elektro-Installationsgerät zur Montage in Kabelkanälen, Unterflurgehäusen, Verteilerschränken, Schaltschränken oder dergleichen Aufnahmegehäusen (2) mit inneren Bodenhalteprofilen (6), bestehend aus einer lösbar mit dem jeweiligen Bodenhalteprofil (6) des Aufnahmegehäuses (2) verbindbaren Grundplatte (12) und einem auf der Grundplatte (12) fixierbaren, elektrische Funktions- bzw. Kontaktelemente enthaltenden Gerätegehäuse (14), wobei die Grundplatte (12) für die Befestigung an dem jeweiligen Bodenhalteprofil (6) mindestens ein auswechselbares, an das jeweilige Bodenhalteprofil (6) angepaßtes Halteteil (16) aufweist, und wobei das Gerätegehäuse (14) aus zwei Gehäuseteilen, und zwar einem Unterteil (64) und einem Oberteil (66), besteht, die einseitig einstückig über Filmscharniere (68) klappbar miteinander verbunden sowie auf der gegenüberliegenden Seite im zusammengeklappten Zustand lösbar miteinander verbindbar sind.

2. Installationsgerät nach Anspruch 1,
**dadurch gekennzeichnet**, daß die beiden Gehäuseteile (64, 66) auf der der klappbar verbundenen Seite gegenüberliegenden Seite miteinander verrastbar sind.

3. Installationsgerät nach Anspruch 1 oder 2,
**dadurch gekennzeichnet**, daß die Grundplatte (12) und das Gerätegehäuse (14) einseitig einstückig insbesondere über Filmscharniere (32) klappbar miteinander verbunden sowie auf der gegenüberliegenden Seite im zusammengeklappten Zustand miteinander lösbar verbindbar, insbesondere verrastbar, sind.

4. Installationsgerät nach Anspruch 1 und 3,
**dadurch gekennzeichnet**, daß das Unterteil (64) des Gerätegehäuses (14) einerseits mit der Grundplatte (12) und andererseits mit dem Oberteil (66) derart auf gegenüberliegenden Seiten klappbar verbunden ist, daß sich eine klappbare Zick-Zack-Anordnung der drei Teile (12,64,66) ergibt.

5. Installationsgerät nach Anspruch 1 oder 2,
**dadurch gekennzeichnet**, daß die Grundplatte (12) und das Gerätegehäuse (14) als separate, miteinander lösbar verbindbare, insbesondere verrastbare, Teile ausgebildet sind.

6. Installationsgerät nach einem oder mehreren der Ansprüche 1 bis 5,
**dadurch gekennzeichnet**, daß zwischen der Grundplatte (12) und dem Gerätegehäuse (14) ein Raum (44) zum Zuführen und zum Anschluß von elektrischen Verbindungskabeln (46) gebildet ist, und zwar durch Wandungsstege (48) der Grundplatte (12) und/oder des Gerätegehäuses (14).

7. Installationsgerät nach einem oder mehreren der Ansprüche 1 bis 6,
**dadurch gekennzeichnet**, daß durch im Bereich zwischen der Grundplatte (12) und dem Gerätegehäuse (14) angeordnete Ansätze (52) Zugentlastungsaufnahmen (50) zum Einstecken und einklemmenden Haltern von Verbindungskabeln (46) gebildet sind.

8. Installationsgerät nach Anspruch 7,
**dadurch gekennzeichnet**, daß die Zugentlastungsaufnahmen (50) derart ausgebildet bzw. angeordnet sind, daß die Verbindungskabel (46) jeweils mit einem - relativ zu der Verlaufsrichtung des Bodenhalteprofils (6) - schräg in einem Winkel zwischen 0 und 90°, insbesondere etwa 40° bis 50°, ausgerichteten Verlauf in die Zugentlastungsaufnahmen (50) einführbar sind.

9. Installationsgerät nach einem oder mehreren der Ansprüche 1 bis 8,
**dadurch gekennzeichnet**, daß die Grundplatte (12) eine Anschlußeinheit (54) für den Anschluß von elektrischen Verbindungskabeln (46) aufweist, wobei vorzugsweise die Anschlußeinheit (54) über eine Steckverbinderanordnung (56) mit innerhalb des Gerätegehäuses (14) angeordneten Kontaktelementen (58) verbunden bzw. verbindbar ist.

10. Installationsgerät nach einem oder mehreren der Ansprüche 1 bis 9,
**dadurch gekennzeichnet**, daß das Gerätegehäuse (14) eine Anschlußeinheit (54) für die Anschlußverbindung von elektrischen Verbindungskabeln (46) mit innerhalb des Gerätegehäuses (14) angeordneten Kontaktelementen (58) aufweist.

11. Installationsgerät nach einem oder mehreren der Ansprüche 1 bis 10,
**dadurch gekennzeichnet**, daß das Gerätegehäuse (14) zur Aufnahme von Kontaktelementen (58) durch stegartige Wandungen (76) gebildete, insbesondere labyrinthartige Aufnahmen (74) aufweist.

12. Installationsgerät nach einem oder mehreren der Ansprüche 1 bis 11,
**dadurch gekennzeichnet**, daß die Kontaktelemente (58) als aus Metallblech bestehende Kontaktbrücken mit mindestens zwei Kontakteilen (82) und einem diese verbindenden Brückenelement (84) ausgebildet sind, wobei vorzugsweise die Kontaktteile (82) und das zugehörige Brückenelement (84) als gesonderte e Teile ausgebildet und jeweils in sich überlappend aufeinanderliegenden Verbindungsbereichen (86) über Durchsetzfügungen (88) unmittelbar formschlüssig miteinander verbunden sind.

13. Installationsgerät nach Anspruch 12,
**dadurch gekennzeichnet**, daß das Gerätegehäuse (14), insbesondere dessen Oberteil (66), im Bereich der Durchsetzfügungen (88) jeweils mindestens eine zur Fügeachse (30) koaxiale Öffnung (92) zum Einführen eines von zwei die jeweilige Durchsetzfügung (88) erzeugenden Fügewerkzeugen (94,96) aufweist.

14. Installationsgerät nach einem oder mehreren der Ansprüche 1 bis 13,
**dadurch gekennzeichnet**, daß die Grundplatte (12) zwei Halteteile (16) aufweist, die jeweils formschlüssig in einer von zwei in Verlaufsrichtung des Bodenhalteprofils (6) gegenüberliegenden Halteteil-Aufnahmen (18) der Grundplatte (12) sitzen.

15. Installationsgerät nach einem oder mehreren der Ansprüche 1 bis 14,
**dadurch gekennzeichnet**, daß das bzw. jedes Halteteil (16) mindestens einen in Profil-Querrichtung federelastisch beweglichen, einen Profilsteg (20) des Bodenhalteprofils (6) formschlüssig oder kraftformschlüssig hintergreifenden Haltearm (22) aufweist, dem vorzugsweise eine Arretierschraube (24) zugeordnet ist, die derart in den Bereich des Haltearms (22) einschraubbar ist, daß dieser hierdurch in seiner dem Profilsteg (20) hintergreifenden Stellung fixierbar ist.

16. Installationsgerät nach Anspruch 15,
**dadurch gekennzeichnet**, daß das bzw. jedes Halteteil (16) zwei mit geringem Abstand etwa parallel verlaufende Haltearme (22) mit einander abgekehrten Rastnasen (26) aufweist, wobei den beiden Haltearmen (22) die gleiche Arretierschraube (24) zugeordnet ist, die zum Fixieren der Rastarme (22) in den zwischen diesen liegenden Bereich einschraubbar ist.

17. Installationsgerät nach Anspruch 15,
**dadurch gekennzeichnet**, daß das bzw. jedes Halteteil (16) einen federelastischen Haltearm (22) und einen von diesem in Profil-Querrichtung beabstandeten, im wesentlichen starren Halteansatz (28) aufweist.

18. Installationsgerät nach einem oder mehreren der Ansprüche 15 bis 17,
**dadurch gekennzeichnet**, daß die Grundplatte (12) und das Gerätegehäuse (14) jeweils gleichachsig mit den Arretierschrauben (24) verlaufende, fluchtende Durchgangslöcher (30) aufweisen.

19. Installationsgerät nach einem oder mehreren der Ansprüche 1 bis 18,
**dadurch gekennzeichnet**, daß das Gerätegehäuse (14) als Steckdose, insbesondere Mehrfachsteckdose, ausgebildet ist.

20. Installationsgerät nach einem oder mehreren der Ansprüche 1 bis 19,
**dadurch gekennzeichnet**, daß das Gerätegehäuse (14) eine Aufnahmeöffnung (98) mit entsprechenden Kontaktelementen zum Einstecken eines Überspannungsmoduls (100) aufweist.

21. Installationsgerät nach einem oder mehreren der Ansprüche 1 bis 20,
**dadurch gekennzeichnet**, daß das Gerätegehäuse (14) lösbar mit mindestens einem topfartigen Steckdoseneinsatz (106) verbindbar ist.

22. Installationsgerät nach einem oder mehreren der Ansprüche 1 bis 21,
**gekennzeichnet durch** eine lösbar mit dem Gerätegehäuse (14) verbindbare, insbesondere verrastbare, Abdeckplatte (102).

23. Installationsgerät nach Anspruch 22,
**dadurch gekennzeichnet**, daß die Abdeckplatte (102) einstückig mit mindestens einem Steckdoseneinsatz (106) ausgebildet ist.

24. Installationsgerät nach einem oder mehreren der Ansprüche 21 bis 23,
**dadurch gekennzeichnet**, daß der bzw. jeder Steckdoseneinsatz (106) mit einer Kindersicherung ausgestattet ist.

## Claims

1. Electric installation device for mounting in cable ducts, underground housings, distribution cabinets, switchgear cabinets or similar holding housings (2) with internal floor-mounted retaining sections (6), comprising a base plate (12) which can be detachably connected to the respective floor-mounted retaining section (6) of the holding housing (2), and a device housing (14) which can be fixed on the base plate (12) and contains electric function elements and/or contact elements, the base plate (12) having for the purpose of fastening on the respective floor-mounted retaining section (6) at least one replaceable holding part (16) adapted to the respective floor-mounted retaining section (6), and the device housing (14) comprising two housing parts, specifically a lower part (64) and an upper part (66) which are foldably connected to one another on one side in one piece via integral hinges (68) and can be detachably connected to one another on the opposite side in the folded-up state.

2. Installation device according to Claim 1, characterized in that the two housing parts (64, 66) can be latched to one another on the side opposite the foldably connected side.

3. Installation device according to Claim 1 or 2, characterized in that the base plate (12) and the device housing (14) are foldably connected to one another on one side in one piece, in particular via integral hinges (32) and can be detachably connected, in particular latched to one another on the opposite side in the folded-up state.

4. Installation device according to Claims 1 and 3, characterized in that the lower part (64) of the device housing (14) is foldably connected on opposite sides to the base plate (12), on the one hand, and to the upper part (66), on the other hand, in such a way as to produce a foldable zig-zag arrangement of the three parts (12, 64, 66).

5. Installation device according to Claim 1 or 2, characterized in that the base plate (12) and the device housing (14) are constructed as separate parts which can be detachably connected, in particular latched to one another.

6. Installation device according to one or more of Claims 1 to 5, characterized in that a space (44) for feeding and connecting electric interconnecting cables (46) is formed between the base plate (12) and the device housing (14), specifically by wall webs (48) of the base plate (12) and/or of the device housing (14).

7. Installation device according to one or more of Claims 1 to 6, characterized in that strain relief receptacles (50) for plugging in interconnecting cables (46) and holding them in a clamped fashion are formed by shoulders (52) arranged in the region between the base plate (12) and the device housing (14).

8. Installation device according to Claim 7, characterized in that the strain relief receptacles (50) are constructed and arranged in such a way that the interconnecting cables (46) can be inserted in each case into the strain relief receptacles (50) with a course which is aligned obliquely - relative to the direction in which the floor-mounted retaining section (6) runs - at an angle of between 0 and 90°, in particular approximately 40° to 50°.

9. Installation device according to one or more of Claims 1 to 8, characterized in that the base plate (12) has a terminal unit (54) for the connection of electric interconnecting cables (46), it preferably being the case that the connecting unit (54) is connected or can be connected to contact elements (58) arranged inside the device housing (14) via a plug-in connector arrangement (56).

10. Installation device according to one or more of Claims 1 to 9, characterized in that the device housing (14) has a terminal unit (54) for the terminal connection of electric interconnecting cables (46) to contact elements (58) arranged inside the device housing (14).

11. Installation device according to one or more of Claims 1 to 10, characterized in that the device housing (14) has receptacles (74), in particular labyrinthine ones, which are formed by web-like walls (76), for the purpose of holding contact elements (58).

12. Installation device according to one or more of Claims 1 to 11, characterized in that the contact elements (58) are constructed as contact bridges, consisting of metal sheet, with at least two contact parts (82) and a bridge element (84) connecting the latter, it preferably being the case that the contact parts (82) and the associated bridge element (84) are constructed as separate parts, and are directly connected to one another in a self-closed fashion in each case via punch joints (88) in mutually overlapping connecting regions (86) situated one on top of the other.

13. Installation device according to Claim 12, characterized in that the device housing (14), in particular its upper part (66), has in each case in the region of the punch joints (88) at least one opening (92) coaxial with the axis of the joint (30), for inserting one of two jointing tools (94, 96) producing the respective punch joints (88).

14. Installation device according to one or more of Claims 1 to 13, characterized in that the base plate (12) has two holding parts (16) which are seated in a self-closed fashion in each case in one of two holding part receptacles (18) of the base plate (12) which are opposite in the direction in which the floor-mounted retaining section (6) runs.

15. Installation device according to one or more of Claims 1 to 14, characterized in that the or each holding part (16) has a holding arm (22), which can move resiliently in the transverse direction of the section, grips a section web (20) of the floor-mounted retaining section (6) from behind in a self-closed or force-closed fashion and is preferably assigned a locking screw (24) which can be screwed into the region of the holding arm (22) in such a way that the latter can thereby be fixed in its position gripping the section web (20) from behind.

16. Installation device according to Claim 15, characterized in that the or each holding part (16) has two holding arms (22) which run approximately parallel at a slight spacing and have latching noses (26) averted from one another, the two holding arms (22) being assigned the same locking screw (24) which, for the purpose of fixing the latching arms (22), can be screwed into the region situated between the latter.

17. Installation device according to Claim 15, characterized in that the or each holding part (16) has a resilient holding arm (22) and an essentially rigid holding lug (28) spaced apart from the latter in the transverse direction of the section.

18. Installation device according to one or more of Claims 15 to 17, characterized in that the base plate (12) and the device housing (14) have aligned through holes (30) which run in each case along the same axis as the locking screws (24).

19. Installation device according to one or more of Claims 1 to 18, characterized in that the device housing (14) is constructed as a socket-outlet, in particular a multiple socket-outlet.

20. Installation device according to one or more of Claims 1 to 19, characterized in that the device housing (14) has a holding opening (98) with corresponding contact elements for plugging in an overvoltage module (100).

21. Installation device according to one or more of Claims 1 to 20, characterized in that the device housing (14) can be detachably connected to at least one pot-like socket-outlet insert (106).

22. Installation device according to one or more of Claims 1 to 21, characterized by a cover plate (102) which can be detachably connected, in particular latched to the device housing (14).

23. Installation device according to Claim 22, characterized in that the cover plate (102) is constructed in one piece with at least one socket-outlet insert (106).

24. Installation device according to one or more of Claims 21 to 23, characterized in that the or each socket-outlet insert (106) is fitted with a child-proof device.

## Revendications

1. Appareil d'installation électrique pour le montage dans des conduits à câbles, des boîtiers sous plancher, des armoires de distribution, des armoires de commutation ou des boîtiers de logement (2) analogues, avec des profilés de fixation au sol (6) intérieurs, constitués d'une plaque de base (12), pouvant être reliée de façon désolidarisable au profilé de fixation (6) respectif du boîtier de logement (2), et d'un boîtier d'appareil (14) susceptible d'être fixé à la plaque de base (12), et contenant des éléments fonctionnels, respectivement de contact, électriques, la plaque de base (12), pour assurer la fixation sur le profilé de fixation au sol (6) respectif, présentant au moins une partie de fixation (16) remplaçable, adaptée au profilé de fixation au sol (6) respectif, et le boîtier d'appareil (14) étant constitué de deux parties de boîtier, précisément une partie inférieure (64) et une partie supérieure (66), ces parties étant reliées d'une seule pièces de façon rabattable sur un côté, par l'intermédiaire de films charnières (68), ainsi que susceptibles d'être reliées ensemble de façon désolidarisable sur le côté opposé, à l'état rabattu.

2. Appareil d'installation selon la revendication 1, caractérisé en ce que les deux parties de boîtier (64, 66) sont susceptibles d'être encliquetées ensemble sur le côté opposé au côté relié de façon rabattable.

3. Appareil d'installation selon la revendication 1 ou 2, caractérisé en ce que la plaque de base (12) et le boîtier d'appareil (14) sont reliés d'une seule pièce de façon rabattable d'un côté, en particulier par l'intermédiaire de films charnières (32), et sont susceptibles d'être reliés ensemble de façon désolidarisable en particulier par encliquetage sur le côté opposé, à l'état regroupé par rabattement.

4. Appareil d'installation selon les revendications 1 et 3, caractérisé en ce que la partie inférieure (64) du boîtier d'appareil (14) est reliée sur des côtés opposés, de manière rabattable, d'une part, à la plaque de base (12) et, d'autre part, à la partie supérieure (66), de manière à obtenir un agencement, rabattable en zigzag, des trois parties (12, 64, 66).

5. Appareil d'installation selon la revendication 1 ou 2, caractérisé en ce que la plaque de base (12) et le boîtier d'appareil (14) sont réalisés sous la forme de pièces séparées, susceptibles d'être reliées ensemble de façon désolidarisable, en particulier par encliquetage.

6. Appareil d'installation selon l'une ou plusieurs des revendications 1 à 5, caractérisé en ce que, entre la plaque de base (12) et le boîtier d'appareil (14), est constitué un espace (44) destiné à l'amenée et au raccordement de câbles de liaison électriques (46), et précisément au moyen de nervures de paroi (48) de la plaque de base (12) et/ou du boîtier d'appareil (14).

7. Appareil d'installation selon l'une ou plusieurs des revendications 1 à 6, caractérisé en ce que, au moyen d'appendices (52), disposés dans la zone se trouvant entre le plaque de base (12) et le boîtier d'appareil (14), sont constitués des logements de relaxation de traction (50), destinés à enficher et à fixer par enserrement des câbles de liaison (46).

8. Appareil d'installation selon la revendication 7, caractérisé en ce que les logements de relaxation de traction (50) sont constitués, respectivement agencés, de manière que les câbles de liaison (46) soient susceptibles d'être introduits chacun dans les logements de relaxation de traction (50) avec une allure oblique - par rapport à la direction d'évolution du profilé de fixation au sol (6) - sous un angle compris entre 0 et 90°, en particulier d'environ 40 à 50°.

9. Appareil d'installation selon l'une ou plusieurs des revendications 1 à 8, caractérisé en ce la plaque de base (12) présente une unité de raccordement (54) destinée au raccordement de câbles de liaison électriques, l'unité de raccordement (54) étant de préférence reliée ou susceptible d'être reliée, à des éléments de contact (58) disposés à l'intérieur du boîtier d'appareil (14), par l'intermédiaire d'un dispositif de raccordement à enfichage (56).

10. Appareil d'installation selon l'une ou plusieurs des revendications 1 à 9, caractérisé en ce que le boîtier d'appareil (14) présente une unité de raccordement (54) destinée à la liaison de raccordement de câbles de liaison électriques (46), à des éléments de contact (58) disposés à l'intérieur du boîtier d'appareil (14).

11. Appareil d'installation selon l'une ou plusieurs des revendications 1 à 10, caractérisé en ce que le boîtier d'appareil (14) présente des logements (74) en particulier du genre labyrinthe, constitués par des parois (76) du genre de nervures, pour recevoir des éléments de contact (58).

12. Appareil d'installation selon l'une ou plusieurs des revendications 1 à 11, caractérisé en ce que les éléments de contact (58) sont réalisés sous la forme de ponts de contact constitués en tôle métallique, ayant au moins deux parties de contact (82), et d'un élément formant pont (84) reliant celles-ci, les parties de contact (82) et l'élément formant pont (84) afférent étant de préférence réalisés sous la forme de pièces séparées et directement reliés l'une à l'autre par leur forme par l'intermédiaire de joints à imbrication (88) dans des zones de liaison superposées en se chevauchant.

13. Appareil d'installation selon la revendication 12, caractérisé en ce que le boîtier d'appareil (14), en particulier sa partie supérieure (66), présente dans la zone des joints à imbrication (88) respectivement au moins une ouverture (92) coaxiale par rapport à l'axe de joint (30), pour l'introduction d'un de deux outils de formation de joint (94, 96) générant le joint à imbrication (88) respectif.

14. Appareil d'installation selon l'une ou plusieurs des revendications 1 à 13, caractérisé en ce que la plaque de base (12) présente deux parties de fixation (16), montées respectivement avec liaison par ajustement de forme dans l'un de deux logements des parties de fixation (18), placés mutuellement en regard dans la direction d'évolution du profil de fixation au sol (6) de la plaque de base (12).

15. Appareil d'installation selon l'une ou plusieurs des revendications 1 à 14, caractérisé en ce que la, respectivement, chaque partie de fixation (16) présente au moins un bras de fixation (22) mobile avec l'élasticité d'un ressort dans la direction transversale du profilé, saisissant par l'arrière, par la forme ou par une force, une nervure de profilé (20) de profilé de fixation au sol (6), bras de fixation auquel est associée de préférence une vis de blocage (24) susceptible d'être vissée dans la zone du bras de fixation (22), de manière que celui-ci puisse être fixé, de ce fait, dans la position dans laquelle il saisit par l'arrière la nervure de profilé (20).

16. Appareil d'installation selon la revendication 15, caractérisé en ce que la, respectivement, chaque partie de fixation (16) présente deux bras de fixation (22) s'étendant à peu près parallèlement à faible distance, comportant des ergots d'encliquetage (26) opposés l'un à l'autre, la même vis de blocage (24) étant associée aux deux bras de fixation(22), vis, qui, pour assurer la fixation des bras d'encliquetage (22), est susceptible d'être vissée dans la zone située entre ceux-ci.

17. Appareil d'installation selon la revendication 15, caractérisé en ce que la, respectivement, chaque partie de fixation (16) présente un bras de fixation (22) ayant l'élasticité d'un ressort et un appendice de fixation (28) sensiblement rigide, espacé de celui-ci dans la direction transversale du profilé.

18. Appareil d'installation selon l'une ou plusieurs des revendications 15 à 17, caractérisé en ce que la plaque de base (12) et le boîtier d'appareil (14) présentent chacun des trous de passage (30) en alignement, s'étendant coaxialement vis-à-vis des vis de blocage (24).

19. Appareil d'installation selon l'une ou plusieurs des revendications 1 à 18, caractérisé en ce que le boîtier d'appareil (14) est réalisé sous la forme d'une prise femelle, en particulier d'une prise femelle multiple.

20. Appareil d'installation selon l'une ou plusieurs des revendications 1 à 19, caractérisé en ce que le boîtier d'appareil (14) présente une ouverture de logement (98) ayant des éléments de contact correspondants pour l'enfichage d'un module de surtension (100).

21. Appareil d'installation selon l'une ou plusieurs des revendications 1 à 20, caractérisé en ce que le boîtier d'appareil (14) est susceptible d'être relié de façon désolidarisable à au moins un insert de prise femelle (106) du genre d'un pot.

22. Appareil d'installation selon l'une ou plusieurs des revendications 1 à 21, caractérisé par une plaque de recouvrement (102) susceptible d'être reliée de façon désolidarisable en particulier par encliquetage, au boîtier d'appareil (14).

23. Appareil d'installation selon la revendication 22, caractérisé en ce que la plaque de recouvrement (102) est réalisée d'une seule pièce avec au moins un insert de prise femelle (106).

24. Appareil d'installation selon l'une ou plusieurs des revendications 21 à 23, caractérisé en ce que le ou chaque insert de prise femelle (106), est équipé d'une sécurité pour enfants.
